# EUROPEAN PATENT APPLICATION

(11) **EP 3 229 475 A1**
(43) Date of publication of application: **11.10.2017**
(21) Application number: 17164870.2
(22) Date of filing: 04.04.2017
(51) Int. Cl.: H04N 21/214, H04N 21/414

(54) **IFE SYSTEM**

(30) Priority: 04.04.2016 US 201662318189 P
(71) Applicant: Greig, Nigel, 1022 Auckland (NZ); Collogne, Emeric Cyrille, 78460 Chevreuse (FR)
(72) Inventor: Greig, Nigel, 1022 Auckland (NZ); Collogne, Emeric Cyrille, 78460 Chevreuse (FR)
(74) Representative: Ahmad, Sheikh Shakeel

(57) **Abstract**

A jack for providing inflight entertainment to an electronic device is described. The jack comprises: a connection means for connection to the electronic device; and a content store adapted to store content for transmission to the electronic device, wherein in use the electronic device can access the content from the content store of the jack.

## Description

### Field of the Invention

The present invention relates to an IFE System to interact with a user's personal electronic device.

### Background

Air travel has become an increasingly popular and affordable mode of transport. Airlines have increasingly sought to provide their passengers with improved services during the course of a flight as competition for passengers has become more intense. One significant in-flight service which is important to passengers on aircraft is in-flight entertainment. This is usually provided by in-flight entertainment (IFE) systems.

Modern IFE systems provide passengers with a variety of audio and visual media options, for example, music channels, games, movies, and television programs. Users can be provided with audio or video-on-demand, meaning that each individual user may select an audio track or audio channel, or an audio-visual programme that they wish to listen to, or watch, at any given time. This is usually achieved by each passenger seat in an aircraft environment having its own visual display unit (usually in the form of an LCD display) and an appropriate jack for receiving the plug for a headset which delivers the audio content to the user.

The delivery of video-on-demand services in a large aircraft requires complex systems such as that described in US8082569. The media is typically stored in digital format and delivered over a network in the aircraft via one or more media servers. The network includes seat distribution units which receive the audio visual information requested by the passengers seated in the seats that the seat distribution unit serves. The seat distribution unit provides the appropriate outputs (being analogue signals, for example) to the relevant screen displays and physical connection points for the headsets. Alternative systems rely on personal electronic devices (PEDs) which connect to the IFE system by a wireless network such as Wi-Fi.

There are a number of physical wiring problems through the use of the seat distribution arrangement. If a passenger seat needs to be moved or changed, for example, then the wiring to the seat distribution unit needs to be changed. Finally, passenger seats such as airline seats are being made smaller and lighter, so room in and around armrests for electronics and cabling is becoming increasingly scarce.

### Objects of the Invention

It is an object of the invention to provide a jack for an inflight entertainment system which will allow a user to connect a personal electronic device to the IFE system.

It is an object of the invention to provide an In-flight Entertainment (IFE) system which will at least go some way to overcoming disadvantages of existing systems, or which will at least provide a useful alternative to existing systems.

Further objects of the invention will become apparent from the following description.

### Summary of Invention

Accordingly in one aspect the invention may broadly be said to consist in a jack for providing inflight entertainment to an electronic device, the jack comprising: a connection means for connection to the electronic device; and a content store adapted to store content for transmission to the electronic device, wherein in use the electronic device can access the content from the content store of the jack.

Providing a content store in the jack enables the server to be removed from the system, or at least remote to the jack, and reduces any wiring throughout the plane. This change makes updating and/or rearrangement of the seating in the plane more straightforward and more cost effective. In use the user can use a connected electronic device to access the stored content by connecting the device to the jack. The content store is contained in the jack so as to, for instance, manage the digital rights of the content.

In an embodiment the connection means is an electrical socket. In an embodiment the socket is a USB socket. In an embodiment the USB socket emulates an Ethernet port to allow data transfer. In embodiments of the invention the connection means is wired or wireless.

The electronic device should be easily connectable to the jack, preferably by a standardised plug such as a USB plug. The jack may connect to the USB socket using an emulated plug so as to improve data transfer across the connection.

In an embodiment the content store is a webserver. In an embodiment the content store is on removable or replaceable hardware, such as a storage device including a USB storage device. In an embodiment the content store is a memory means, such as a magnetic memory means, read only memory (ROM) or random access memory (RAM). In an embodiment the content store comprises digital rights management (DRM). In an embodiment the content store is presented through a web browser. In an embodiment the content store comprises any one or more of: media; audio-visual data; video data; flight information data; help or usage instructions; music; videos; and/or games.

The content store is designed to at least have the features of current, central server based, systems, in which content is provided by a wired connection to a server. In preferred embodiments the content store is provided on removable hardware to allow updates or replacement and can be accessed easily through a web browser by a connected electronic device.

In an embodiment the system comprises a power supply socket. In embodiments the power supply socket is a USB type socket. In embodiments the USB socket is the same socket as the communication means. In embodiments the power supply socket is adapted to receive power from a connected device. In embodiments the connected device is the electronic device connected to the communication means or accessing the content store. In embodiments the jack requires a power supply to be connected to the power supply socket before activating the content store. In an embodiment the power supply socket provides power to the connected electronic device.

The jack can have a power connection between the jack and an electronic device. The power connection may supply power to the jack from the electronic device or to the electronic device from the jack, depending on configuration of the system or power needs. In some embodiments this enables the jack to be separate from the aircraft electronics or power requirements, reducing the power load on the plane. In the alternative embodiment the jack acts as a IFE providing jack and as a charging jack to ensure the electronic device has sufficient charge.

In embodiments the jack comprises a battery connection means. In embodiments the battery connection means is a slot or jack in which the battery is placed. In embodiments the battery connection means is a USB socket and a user may connect a battery. In further embodiments of the invention the jack is connected to an aircraft power source. In embodiments the aircraft power source is associated with a seat electronics box (SEB).

The jack may receive power through a wired connection to the aircraft, preferably through typical connection means such as seat electronics boxes (SEBs). This retains the reduced wiring in the plane as these connections are typically already required for lighting and speakers etc. In combination, or alternative embodiments the jack may have a removable or connectable battery bank or power storage device. This may form a cartridge or slot to allow easy replacement between flights or when low charge is detected. An indicator means such as a light or sound may be used to indicate the units which need to be replaced. The power storage device may be combined with the content store to allow frequent updates of content.

In an embodiment of the invention the jack comprises a communication means to a server. In embodiments of the invention this is a wireless communication link such as Wi-Fi or Bluetooth. In embodiments of the invention the communication means uses the power connection to the jack. In embodiments of the invention the communication means is intermittent or is accessed only when the jack is not in use. In embodiments of the invention the server communication means allows updates to the control of the jack or the content of the content store. In an embodiment the server communication means allows communication between jacks, wherein jacks receive communication indirectly from a server.

In embodiments of the system the communication means is adapted to receive signals from a transmitter. In embodiments these signals are emergency signals, or plane signals.

In an embodiment the jack comprises a detection means for detecting a user associated with the jack. In an embodiment the detection means is a sensor such as a position or distance sensor. In an embodiment the detection means an electromagnetic sensor or a mechanical sensor. In an embodiment the detection means adjusts the power usage of the jack. In an embodiment the detection means activates a low power mode.

In an embodiment the jack comprises a data communication means to a plurality of jacks. In an embodiment the data communication means is wireless. In an embodiment the data communication means is an electromagnetic communication means. In an embodiment the communication means is Radio Frequency. In an embodiment the communication means is Wi-Fi or Bluetooth. In an embodiment the data communication means has a master/slave connection to each of the plurality of jacks. In an embodiment the data communication means allows transfer of content from the content store to at least one of the plurality of jacks.

In a further aspect the invention may broadly be said to consist in a method of providing IFE content in a passenger vehicle comprising a jacks the method comprising the steps of: connecting an electronic device to a jack, the jack comprising a connection means and content stored in a content store; and receiving content from the content store on the electronic device.

In an embodiment the method includes the step of removing and replacing or updating the content store in the jack.

In an embodiment the method includes the step of authorising access to the content store.

In an embodiment the method includes the step of downloading an application to the electronic device.

In an embodiment the method includes the step of providing a power source to the jack.

In embodiments the content store and jack are associated with an SEB, the content store supplying multiple jacks from the SEB.

In a further aspect the invention may broadly be said to consist in a system for providing In-flight entertainment in an aircraft, the system comprising: a plurality of jacks, each jack comprising a connection means and a content store, wherein an electronic device connected to the connection means has access to the content in the content store.

In an embodiment the system comprises a plurality of seat electronics boxes, each seat electronics box supplying power to at least one of the plurality of jacks;

In an embodiment each jack is attached to, or associated with, a passenger location in the aircraft.

The disclosed embodiments may be features of any one or more of the described embodiments, except where this is not possible.

The disclosed subject matter also provides a jack, an inflight entertainment system or a method of using an inflight entertainment system which may broadly be said to consist in the parts, elements and features referred to or indicated in this specification, individually or collectively, in any or all combinations of two or more of those parts, elements or features. Where specific integers are mentioned in this specification which have known equivalents in the art to which the invention relates, such known equivalents are deemed to be incorporated in the specification.

Further aspects of the invention, which should be considered in all its novel aspects, will become apparent from the following description.

### Drawing Description

A number of embodiments of the invention will now be described by way of example with reference to the drawings in which:
**Fig. 1** is a schematic diagram of a jack in an embodiment of the described system;
**Fig. 2** is a schematic diagram of two jacks connected to an aircraft SEB in an embodiment of the described system; and
**Fig. 3** is a schematic diagram of an aircraft having a plurality of jacks in an embodiment of the system.

### Detailed Description of the Drawings

Throughout the description like reference numerals will be used to refer to like features in different embodiments.

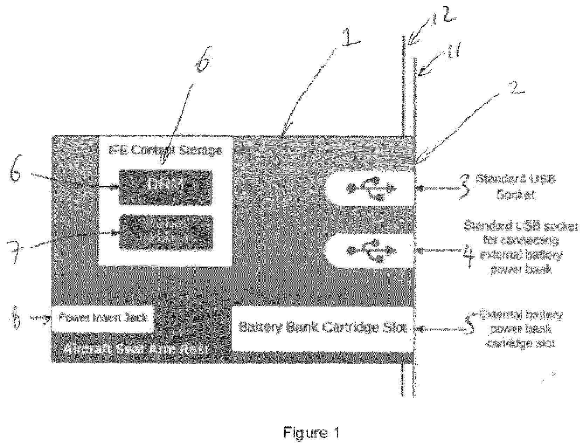

Figure 1 shows a schematic diagram of a jack 1 having a front face 2 with a connection means 3 such as sockets, plugs or connection locations. In some embodiments connection means 3 may be a single connection means with multiple functions, or only a single connection means may be accessible. In other embodiments connection means may be made inaccessible, using some sort of blockage or plug. The connection means 3 provides a connection location or point for an associated connector to contact the jack 1. In some embodiments the connection means 3 may be wireless. The connection means could be a USB socket, or other socket means which establishes a physical or non-contact connection between an electronic device and the jack. Preferably the jack is associated with a seat, or passenger location, of a passenger vehicle. The jack 1 may, for instance, be in the armrest of the vehicle. The passenger vehicle is preferably an aircraft, although other mass transport vehicles may also be used.

Figure 1 shows a second connection means 4, preferably to allow a power supply to, or from, the jack 4. The connection means 4 may be the same as 3 or may be a different type of connector. The front face 2 may have further connection points or locations to allow different types of connection means. For instance a connection means such as a cartridge slot 5, or other formed cavity may be present to receive, for instance, a battery bank, or content device. The jack 1 may have a flange 11 to allow the jack 1 to be placed in an insert 12. The second connection means 4 may be adapted or configured to connect to a second personal electronic device such as a mobile phone, IPOD or tablet computer. It could also connect to a battery bank so as to supply additional power if a power problem occurs.

The jack 1 of Fig. 1 has a connectable or embedded content store 6. The content store comprises in-flight entertainment content. The in-flight entertainment is well known to a skilled person and will include audio-visual data, trip information, plane information, movies, music and games. In embodiments the content will include digital rights management (DRM). The DRM may be contained in the content itself, or the content store may apply DRM techniques which transmitting the data. The content store preferably has an update means 7. The update means may be a wired or wireless connection, including for instance a removable memory cartridge, USB connected electronic device, other wired connections including Ethernet, Bluetooth, Wi-Fi. In some embodiments the update means may use the connection means 3, 4 or power means 5, 8. This is likely to occur only when the jack is not providing content to a user. The update means allows the content on the content store 6 to be updated so that, for instance, recent movies can be provided to a user. The content store is preferably stored in a memory. The memory may be Read Only Memory (ROM), or Random Access Memory (RAM) and is preferably an integrated chip, similar to those used on a USB storage drive. The jack preferably further comprises a microprocessor in connection, or connectable with the memory. The microprocessor may run software or include logic to control the jack, or the content supplied to a connected user device.

The memory may be fixed to the jack or may be supplies on removable media, such as a USB storage device. An advantage of a USB storage device is that updating or replacement can be performed manually. Embodiments may use an external slot similar to the cartridge slot 5. There may be an electronic or mechanical lock to avoid the USB storage from being removed. In an alternative embodiment the USB storage device is supplied to a user outside the passenger vehicle, such as an aircraft, and the user connects the USB storage device to the jack to provide a desired content store. In this way the content store can be stored externally to the aircraft. The USB storage device, or the content store 6, can have DRM so that it is only playable through an aircraft jack. The content store 6, memory, or a part thereof, can be easily removed to allow for rapid memory swap for content update.

When an electronic device, preferably a personal electronic device is connected to the connection means or connector 3 it is provided access to the content store 6. In some embodiments the content provided by the content store 6 may be protected by a password or other activation means so as to provide improved service to selected users. In a preferred embodiment the content store is a computation means such as a computer or microcontroller. In a particular embodiment the computation means is a single boarded computer (SBC). The SBC computer preferably hosts a webserver. An electronic device is able to access the content through an internet browser, or similar application, on the electronic device. This means that the jack will basically act like a webserver and the user will be able to browser and access the content as if they were looking at a webpage. This embodiment has the benefit of usability since most people are familiar with a web browser and also added security as they will not have direct access to a hard drive. The computation means may also have additional peripherals such as HDMI, USB type-C, or other ways of accessing content.

In an embodiment of the invention the connection means 3, 4 comprise an emulated port. In a particular embodiment the electronic device may connect to or interface with a USB connection means 3 which emulates an Ethernet port. The computation means can then have an Ethernet adapter to provide a direct connection to the web server network stack on the SBC and the user can use a standard USB port cable to connect to the jack.

In an embodiment of the invention the content means, or the jack, has a communication means 7 to allow the content store, computation means, or jack to communicate with a further device, such as a server or content updater, or a further jack. In some embodiments the communication means 7 is intermittent, used only to update the content of the content store when required. In this embodiment it may be possible to use the power connections to the jack, or connection means 3, 4, 5, 8 which have a different use in normal use of the jack. For instance the jack 1 may be adapted to update the content storage by a program which connects through the communication means 3, if a particular process is followed. In an alternative embodiment the jack may have a communication device to interface with neighbouring, or closely spatially located jacks. This enables a single jack 1 provide a content store for a plurality of jacks.

The communication means for this may be low power wireless communication such as low power Wi-Fi or low power Bluetooth. In this embodiment the jack 1 may act as a master for a number of slave jacks which do not have a content store, or have a smaller content store. The master jack 1 may have no socket 3 for an electronic device and simply act as a small server jack. A plurality of jacks 1, 1 a may form a local area network using a wireless signal, preferably a short range wireless signal. This allows reduction in the size and power requirements across the plurality of seats associated with the jacks 1, 1 a. Embodiments of the system use the communication means to share emergency or high priority signals. For instance transmissions by the aircrew or cockpit staff may be received by the communication means and be directed to the electronic devices. The high priority signals may override the content provided by the content store 6. In some embodiments the communication means is adapted to only receive high priority signals. Preferably the master is connected by wire to the slave jacks so as to reduce the amount of wireless transmission in an airplane.

Figure 1 shows a jack 1 having a power connection means 8. In embodiments of the invention the power connection means 8 may supply power to jack to allow operation of the content store and/or power to a connected or associated electronic device. The power may be supplied from a battery source, such as that connected by cartridge 5, or from the passenger vehicle or plane directly. In alternative embodiments the jack 1 may not receive power from the plane. Instead the jack 1 may require a battery to be connected in or to a battery connection means 5, or may rely on power from the electronic device connected to the connection means 3, 4. In this embodiment the system may have a separate power supply for the electronic devices. In embodiments where a power supply is required for the jack there may be an indicator, such as a light or sound when the power of the jack has reached a particular threshold. There may be a plurality of thresholds with different indicators depending on the urgency, or other characteristics, of a change in power.

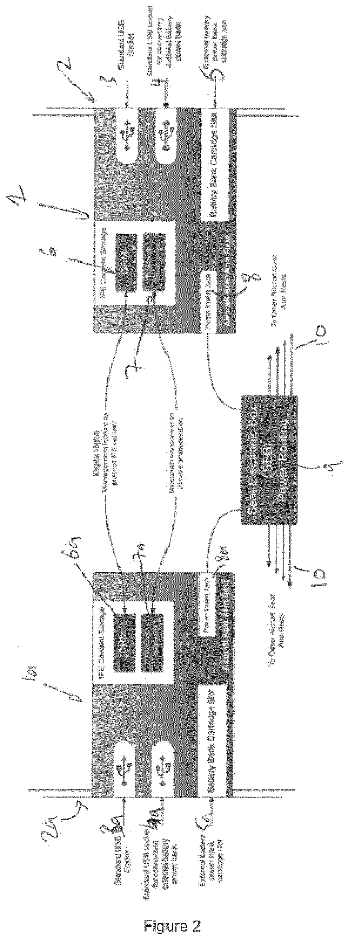

Figure 2 shows a schematic of the relationship between two jacks 1 and a seat electronics box (SEB) 9. SEBs are known in the art for supplying power to a plurality of seats, such as a row of seats. In this example the SEB 9 is supplying power to two jacks 1, 1a. Because only power is being supplied the wiring required both to and from the SEB 9 is greatly reduced. The jacks 1 a and 1 b may be placed in the arm rest of seats in the aircraft. In a further embodiment a jack may be placed on a shared armrest and comprise a plurality of connection means 3, 3a. As discussed above the jacks 1, 1 a have a communication means 7, 7a which may be used to communicate between jacks, or to an external apparatus for updating or adjusting the jacks 1, 1a. The SEB is linked to the power supply for the aircraft as well as a plurality of aircraft seats by wires 10 or other connection means. In an embodiment of the system the power supply can be daisy chained, or connected between jacks to reduce wiring. That is to say the SEB may supply power to a first jack, which is then connected to a second jack which is connected to a third jack and so on. In an embodiment the wiring between the SEB and jack may include variations of the star type and daisy chained connections.

In an embodiment of the invention the system comprises a method of using the system where a user brings an electronic device, such as a computer, or mobile phone, or tablet, or a device suitable for playing games, audio or visual media on to the aircraft. The electronic device may be a personal electronic device. The user connects the electronic device to the jack 1 by connection means or connector 3, or a similar wireless connection means. This provides access to the content store 6 and the audio-visual data stored on the jack which provides inflight entertainment. In embodiments of the system a power connection from the electronic device provides power to the jack, or alternatively the jack 1, or a further jack, provides power to the electronic device. In this way a user can access the latest audio-visual data from the aircraft without requiring wiring throughout the aircraft.

The content store 6 can be updated by a user using the communication means 7 which updates each unit, or by a removable content store 6, such as on a storage device which is physically attached or inserted into the jack 1. In a further embodiment updates may be by connection of a update means to the connection means 3, 4 which updates the content store. In a further embodiment the jack may be removable for updating of the content store, or swapping with an updated jack. In some embodiments the user, or vehicle staff, provide an external battery or power bank to supply power to the jack, this may be through power means 4 or connection location 5. The jack may have an indicator, such as an LED light to indicate the status of a jack, such as if it is updating. For instance a light may be added to the jack to always be on but to go off while updating and then go on once updating is finished. The particular switching of the light may be varied.

The system may have a sensor associated with, or part of, the jack 1 which determines if a user is using, or located near the jack. The sensor may detect an electrical connection with the socket, or movement near the socket. Alternatively the sensor means detects a pressure of or distance to a passenger, possibly through connection to the seat. The sensor may be used to activate features of the jack 1, or to set a low-power mode.

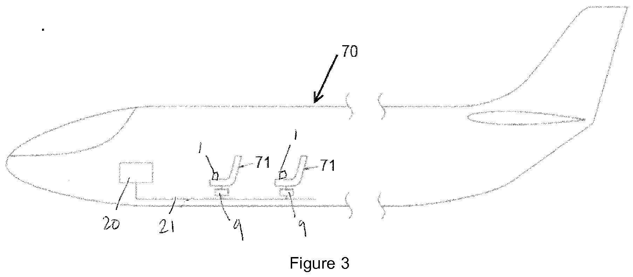

Figure 3 shows an implementation of the system on a plane 70 having a plurality of passenger locations or seats 71. Each seat or a group of seats may be associated with a seat electronics box 9 which may be connected to a power source 20 by cabling or wires 21. One or more jacks 1 may be associated with each seat or group of seats. The jacks may be unitary with, or removable from, the seats. In further embodiments the jacks 1 may be attached to a first seat 71 but provide services to a neighbouring seat 71.

From the foregoing it will be seen that a jack and inflight entertainment system are provided which enables supply of content to users without wiring a full passenger vehicle.

Unless the context clearly requires otherwise, throughout the description, the words "comprise", "comprising", and the like, are to be construed in an inclusive sense as opposed to an exclusive or exhaustive sense, that is to say, in the sense of "including, but not limited to".

Although this invention has been described by way of example and with reference to possible embodiments thereof, it is to be understood that modifications or improvements may be made thereto without departing from the scope of the invention. The invention may also be said broadly to consist in the parts, elements and features referred to or indicated in the specification of the application, individually or collectively, in any or all combinations of two or more of said parts, elements or features. Furthermore, where reference has been made to specific components or integers of the invention having known equivalents, then such equivalents are herein incorporated as if individually set forth.

Any discussion of the prior art throughout the specification should in no way be considered as an admission that such prior art is widely known or forms part of common general knowledge in the field.

## Claims

1. A jack for providing inflight entertainment to an electronic device, the jack comprising:
a connection means for connection to the electronic device; and
a content store adapted to store content for transmission to the electronic device,
wherein in use the electronic device can access the content from the content store of the jack.

2. A jack as claimed in claim 1, wherein the connection means is a wired socket.

3. A jack as claimed in any one of claims 1 or 2, wherein the content store comprises a webserver and/or is configured for access through a web browser.

4. A jack as claimed in any one of claims 1 to 3, wherein the content store is stored on removable or replaceable hardware.

5. A jack as claimed in any one of claims 1 to 4, comprising a power supply socket.

6. A jack as claimed in claim 5, wherein the power supply socket is adapted to receive power from a connected device.

7. A jack as claimed in claim 6, wherein the jack requires a power supply to be connected to the power supply socket before activating the content store.

8. A jack as claimed in any one of claims 1 to 7, comprising a battery connection means.

9. A jack as claimed in claim 8, wherein the battery connection means is a slot or jack adapted to support a battery.

10. A jack as claimed in any one of claims 1 to 9, wherein the jack comprises a connection means adapted to connect to an aircraft power source.

11. A jack as claimed in any one of claims 1 to 10, comprising an indicator.

12. A jack as claimed in any one of claims 1 to 11, comprising a communication means adapted to communicate to a server or update means.

13. A jack as claimed in claim 12, wherein the communication means is wireless.

14. A jack as claimed in either one of claims 12 or 13, wherein the communication means is configured to receive a broadcast data signal.

15. A jack as claimed in any one of claims 1 to 14, comprising a sensor, wherein the sensor is configured to detect a user associated with, or in a location surrounding, the jack.
